# EUROPEAN PATENT SPECIFICATION

(11) **EP 0 712 227 B1**
(45) Date of publication and mention of the grant of the patent: **25.02.2004**
(21) Application number: 95308134.6
(22) Date of filing: 14.11.1995
(51) Int. Cl.: H04M 3/30, H04M 1/24

(54) **Trouble-shooting system for telephone system**
Fehlerbeseitigungssystem für Fernsprechsystem
Système de détection de pannes pour un système téléphonique

(30) Priority: 14.11.1994 US 340083
(43) Date of publication of application: 15.05.1996
(73) Proprietor: HARRIS CORPORATION, Melbourne, FL 32919 (US)
(72) Inventor: Horton, Michael D., Ojai, California 93023 (US); Schillaci, Onofrio, Camarillo, California 93010 (US); Rischpater, Raymond William, Felton, California 95018 (US)
(74) Representative: van Berlyn, Ronald Gilbert

(56) References cited:
- US-A- 4 841 560
- US-A- 4 922 516
- US-A- 4 977 399

## Description

The present invention relates to telephone communication systems and networks, and is particularly directed to a new and improved automated trouble-shooting mechanism, resident in and employed by a craftsperson's portable test/communications device, which is operative to generate a trouble-shooting strategy, based upon information and reactional testing, thereby enabling the craftsperson to expeditiously remedy of a problem specified in a trouble ticket issued from a dispatch center.

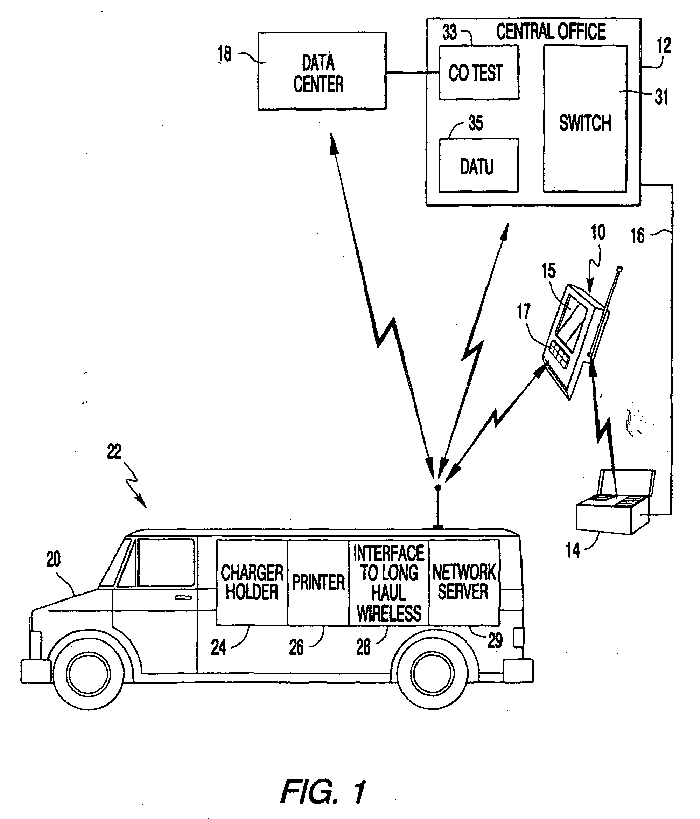

Figure 1 diagrammatically illustrates the general configuration of a portable telecommunications test system the system comprising a hand-held personal computer-based test and communications unit 10, through which a craftsperson, who has been directed by a dispatch center to a service site, which may be remotely located with respect to a central office 12 serving a line to be tested (or line under test (LUT)) 16, may communicate with central office 12 and with a generic test head 14 that is connectable to the LUT 16.

The test system functionality of the supervisory control mechanism executed by the internal processor of the craftsperson's hand-held computer unit 10 is intended to provide the service technician with a user-friendly, icon-based, test procedure for facilitating the craftsperson performance of various tests on a selected line. In so doing, the craftsperson's portable computer is able to interact with multiple types of existing operational support systems, as well as provide a platform for add-on information exchanges.

For this purpose, via a contact-sensitive (e.g., pen touch-operated) video display panel 15, and an associated keyboard 17 of hand-held computer unit 10, the craftsperson may selectively invoke one or more test operations represented by a set of analysis and test function-associated icons. In response to these selections, the internal control processor of unit 10 executes communication and signal processing operations associated with an identified test. The test head 14 proper performs data acquisition on demand from the personal computer unit 10, including the execution of functional tests. Test head 14 and hand-held personal computer unit 10 can be expanded through plug-in cards and software programs for coupling with various diverse types of communication links.

In order to communicate with a remote network facility (central office 12 or data center 18 associated with the central office 12), the craftsperson's computer unit 10 contains a transceiver interface, which is further interfaced with a communication and signal processing sub-system on board the technician's service vehicle or van 20. The communication and signal processing sub-system on board the van, in turn, links the craftsperson's portable unit 10 with the remote network facility, via either a short haul wireless link, or by way of an auxiliary back-up wireline link. The respective communications interfaces within a craftsperson's portable unit and a van's sub-system.

The craftsperson may be provided with an auxiliary voice-activated, wireless headset for conducting wireless voice communications with hand-held computer unit. Such a wireless headset can be used with the hand-held computer and the test head to run automated tests, with an audio go/no-go indication of the test results being provided to the craftsperson.

The service van's communication and signal processing sub-system 22 includes a battery holder/charging station 24, a printer 26, a long haul wireless interface 28 and a network server 29. Battery holder/charging station 24 is configured to receive and store the portable hand-held computer unit 10, so that the computer unit 10 may be secured and stowed, and its associated power supply (battery pack) may be recharged, when not in use. Printer 26 is available to print out various test results or other information. Long haul wireless interface 28 provides a wireless gateway to long haul wireless services, while network server 29 contains a file server that provides additional processing power and electronic data storage. Network server 29 is operative to perform auxiliary data processing tasks on demand from the computer unit 10.

Central office facility 12 typically includes a central office switch 31, central office test devices 33, and a line-conditioning device 35, such as a direct access test unit (DATU), or (SASS) transmission conditioning system. The central office test devices 33 are capable of providing an interface with various operational support systems of the data center 18, such as a service vehicle dispatch, outside plant record database, automated testing systems, and electronic network schematics. The line-conditioning device (e.g. DATU or SASS) 35 within central office 12 provides the craftsperson with the ability to selectively conduct a number of tests of a line, by invoking specified key combinations (sequences) from a standard craftsperson's telephone test set.

In the course of conducting a test via test head 14, the craftsperson's personal computer unit 10 receives the measured data from the test head and operates on the data to convert the measurement results into usable parameter information. This usable parameter information is then linked to the service vehicle's communication sub-system 22, so that appropriate commands may be forwarded to a line-conditioning device or automated test equipment in the central office 12.

In a non-limiting example of responding to a trouble ticket that has been issued by a dispatch center and contains a customer service request, the system of Figure 1 operates as follows. After being dispatched to and travelling to a test site (using service vehicle 20), the craftsperson proceeds to couple the test head 14 to the line under test 16. Using the portable computer unit 10, the technician then establishes communications with the test head 14 and, via the communication sub-system 22 in van 20, with the central office, so that one or more tests of the line may be conducted.

Once the technician has coupled the test head 14 to the line under test, the test application software resident in hand-held computer unit 10 is operative to display icons associated with respective test procedures for evaluating the LUT via the contact-sensitive computer display panel 15. In response to the service technician selecting a desired test function, the resident test software of computer unit 10 proceeds to interactively generate additional menus, through which the craftsperson specifies further choices for defining parameters required for implementing the selected test. Based upon the choices selected by the craftsperson, computer unit 10 assembles and transmits a message to the test head and to the central office for establishing what test or tests are to be conducted and the parameters associated with those tests.

When a selected test is invoked, the test head measures the response of the line to one or more conditions placed on the line, and transmits the test response data back to computer unit 10 for storage in memory and analysis in accordance with an on-board test or line analysis program. Based upon the results of the processed information, the craftsperson may direct the test device to perform one or more additional tests, until the line has been completely tested.

Reference is made to prior art document US-A-4922516 which discloses an improved craft technician's field terminal of the portable, hand-held type for use in communicating in diverse modes with a central technician access network. The terminal is connected to the telephone line in conventional manner in communication with the telephone access network; however, the terminal includes a SMART DIAL program that determines the type of service of the seized subscriber line thereby to facilitate out-dialing from the terminal. Job data can then be transmitted from the central network and downloaded to the terminal for instantaneous display. Re-transmission can be requested if needed. The terminal is capable of uploading data from the terminal display in either DTMF and/or ASCII to the central network. The craft technician's terminal contains a much greater storage capacity than hitherto and it is capable of holding job order and response data for what amounts to greater than a full days technician work. In addition, data displayed at the terminal may readily be transmitted for printer access while still being retained in the terminal storage.

Reference is made to prior art document US-A-4841560 which discloses a direct access test unit for enabling a craftsperson at a telephone facility remote with respect to a central office to test subscriber lines comprises a first access port coupled to an access line circuit, by way of which the remote telephone facility communicates with the telephone office in the course of testing subscriber lines, and a second access port coupled to a test trunk circuit by way of which a subscriber line is to be tested by the test unit. Coupled between the first and second access ports is a processor-controlled subscriber line test/interface arrangement which is responsive to (tone) dial signals, generated by the remote telephone facility, and representative of a command to conduct a test of a selected one of a plurality of subscriber line circuits that are accessible by the test unit from the second access port, including the line circuit to which said remote telephone facility is connected, for accessing the subscriber line circuit via the second access port and conducting tests of the subscriber line circuit by way of the test trunk circuit. Stored within the memory of the processor which controls the operation of the test unit are voice message menus, each in a respectively different language (e.g. English, Spanish) the contents of which are controllably accessed and synthesized for transmission to the craftsperson via the first access port. The voice messages include instructions for guiding the craftsperson in the course of carrying out a test of a selected subscriber line.

Reference is made to prior art document US-A-4977399 which discloses a test system in a ratio paging system of the type having digital data modulated onto radio signals transmitted from a radio station to receiving units at remote sites. The test system includes a transmitter test module coupled to a radio transmitter at the station and a test bed module located at the remote site. The transmitter test module includes a microprocessor for generating digital test data, and a modulator coupled to the microprocessor for modulating the test data onto a radio signal and for injecting the radio signal into the station transmitter. The test bed includes a receiver for receiving the modulated radio signal, a demodulator for demodulating the received radio signal to recover the digital test data, and a computer for processing the recovered digital test data to generate paging test information. The mobile test bed also includes means for determining the latitude and longitude of a site to generate digital location data which is used to generate test information. The test system further includes a mobile vehicle for transporting the test bed, a power supply in the vehicle for providing power to the test bed, and means for determining the distance travelled by the vehicle to provide a test sampling rate. The test bed and the transmitter test module may communicate using a cellular phone ystem for transmitting and receiving coded dial tones. The coded dial tones correspond to predetermined digital test data patterns and other test information.

The present invention consists in a portable communication and processing unit through which a craftsperson, who may be dispatched to a service site that is remotely located with respect to a telephone office serving a subscriber line may communicate with a subscriber line test system of said telephone office via a long haul wireless interface mounted in a craftsperson's service vehicle, and with a test head that is connectable to said subscriber line, said communication and processing unit having an input/output device, including a visual display, through which information input by said craftsperson is converted into prescribed control signals and transmitted to said test system and through which information associated with the operation of said test system is presented to said craftsperson,
characterized in that:
said portable communication and processing unit contains an information processing, trouble-shooting application engine, and first and second databases coupled thereto, said first database being a knowledge database which is adapted to store rules and static parameters which define the characteristics and behavior of said application engine, said second database being a shared database which is adapted to store parameter data associated with one or more tests conducted on said line, said trouble-shooting application engine being adapted to perform a diagnostic evaluation of data in said shared database, in accordance with rule sets stored in said knowledge data base and being adapted to generate a proposed solution to the problem in said line that will guide said craftsperson to remove the fault.

The invention also consists in a method of conducting a test of a subscriber line by a portable communication and processing unit through which a craftsperson, who is dispatched to a service site remotely located with respect to a telephone office serving said subscriber line, communicates with a subscriber line test system of said telephone office via a long haul wireless interface mounted in a craftsperson's service vehicle, and with a test head that is connectable to said subscriber line, said communication and processing unit having an input/output device, including a visual display, through which information input by said craftsperson is converted into prescribed control signals and transmitted to said test system and through which information associated with the operation of said test system is presented to said craftsperson,
characterized by the step of:
providing said portable communication and processing unit with an information processing, trouble-shooting application engine, and first and second databases coupled thereto, said first database being a knowledge database storing rules and static parameters which define the characteristics and behavior of said application engine, said second database being a shared database storing parameter data associated with one or more tests conducted on said line, said trouble-shooting application engine performing a diagnostic evaluation of data in said shared database, in accordance with rule sets stored in said knowledge data base and generating a proposed solution to the problem in said line that will guide said craftsperson to remove the fault.

The test system functionality of the supervisory control mechanism executed by the internal processor of the craftsperson's hand-held computer unit is intended to provide the service technician with a user-friendly, icon-based, test procedure for facilitating the craftsperson performance of various tests on a selected line, whereby the craftsperson's portable computer is able to interact with multiple types of existing operational support systems, as well as provide a platform for add-on information exchanges.

Conveniently the present invention is directed to a particular implementation of such a supervisory control mechanism, which is operative to analyze multiple sources of information, including user inputs from the craftsperson, parametric data embedded in the dispatch (trouble ticket), test data obtained through the execution of local tests, and remote test data (obtained through a system such as a mechanized loop testing (MLT) system), and to derive therefrom a trouble-shooting strategy that will enable the craftsperson to expeditiously determine the cause of the problem that gave rise to the generation of the trouble ticket.

Advantageously the system architecture comprises an information processing sub-system, trouble-shooting application engine, and an associated set of databases, one of which is a knowledge or 'experience' database, and the other of which is a shared, parameter database. The knowledge database contains rules and static parameters which define the characteristics and behavior of the application engine. These rule sets and information are application specific, here - telephone line trouble-shooting specific, having been prepared in accordance with a rigorous diagnostic evaluation of all possible problems that may occur on a line, the potential sources of such problems, and recommended procedures to repair the line and thereby remove the fault. As the system learns new attributes of problems and remedial procedures, the knowledge database is updated to include that information, so as to enable the application engine to make a more informed decision when recommending a trouble-shooting strategy.

The data stored in the shared database may be supplied from a variety of external sources, such as data acquired through an automated craft dispatch - work order manager software application, such as an AT&T CAS (craft access system) application, technician access network (TAN), or automated work administration system (AWAS), measurement data sourced by portable test equipment (PTE), or data input by the user.

The trouble-shooting application engine is operative to use the rules and parameters of the knowledge database to establish a field of possible/probable fault candidates that have relationships or linkages with a critical point of a set of control parameters. The candidates of a given field are those which exhibit one or more symptoms revealed by values of test parameters. Using test parameter data in the shared database, the engine refines the field of candidates to those containing successively smaller numbers of members, until a most likely candidate as the cause of the problem is established.

In particular, as the shared database is dynamically updated with test result information derived from measurements conducted on the line or from an application system, the application engine processes this information in accordance with the rule set of the knowledge data base and excludes from the field of candidates those points that are no longer sufficiently closely linked to the control point based upon the relationship specified by the control model. Eventually, the field is reduced to a single, most likely fault candidate point, which the engine uses to generate a remedial strategy message to the craftsperson via the computer display screen.

In accordance with the operational flow sequence carried out by the trouble-shooting strategy generating mechanism in accordance with the present invention will be described, when craftsperson is dispatched to a job site, and establishes a communication with the necessary remote facility, such as a central office and associated data center, the technician downloads whatever information is available for the trouble ticket being serviced, which may include the output of exercised test equipment, in order to provide parametric data for the line being serviced, that will enable the application engine to estimate the cause of the fault.

Accompanying the downloaded parametric test data is a prescribed test identification (VER) code that associates the test conducted by the mechanized test equipment with the rule set in the knowledge database. Once the test measurement and data download operation is complete, the user is presented with a display screen that contains a menu of options, that may include further testing of the line, or other functions. Since the application engine generates a trouble-shooting strategy based upon a diagnostically evaluation of the trouble ticket and available measurement data stored in the shared database, the level of experience or skill of the technician will not prevent a successful choice of menu items to accomplish the task.

Each menu screen includes a "Help" icon. When this icon is invoked, the application engine displays a message to the user indicating the results of its analysis of the information currently available in the knowledge and shared databases and recommends what the technician should do next. The engine then specifies what method is to be carried out based upon the VER code and available parametric test data. Based upon the selected method, a message will be displayed that will instruct the user what should be done.

If preliminary information provided by the trouble ticket and the results of initial test measurements are sufficient for the application engine to determine the cause of a fault, a location and repair scenario message is generated. The application engine is operative to coordinate data gathering and analysis, including invoking of an external test function (e.g. a request to the DATU to open the subscriber line), and the observation or measurement of the line's response to the invoked operation (e.g. reading the response of a test head monitoring that line which, for the example of requesting a DATU to open the line, should cause the test head see no voltage).

If further testing of the line is necessary, a displayed message may instruct the user to again exercise one or more additional tests. Thus, instruction message screens are successively generated, as necessary, and the user is instructed to derive additional information, such as by exercising the test head, until the application engine has refined a field of potential causes to a single probable source. The displayed message not only represents the results of the engine's analysis of the trouble ticket and test and parameter data, but serves to provide practical information to the technician. The craftsperson may then proceed to carry out the suggested correction procedure, to remedy the fault. Upon completion of this exercise, the line may again be tested to verify the repair.

The invention will now be described, by way of example, with reference to the accompanying drawings in which:
Figure 1 diagrammatically illustrates the general configuration of the portable telecommunications test system.
Figure 2 shows the fundamental system architecture of the present invention as comprising an information processing sub-system, trouble-shooting application engine, and an associated set of knowledge and shared parameter databases;
Figure 3 diagrammatically illustrates a field of candidate points, which are associated with respectively different potential anomaly or fault candidates for the cause of the problem that prompted the generation of a trouble ticket for a given line to be tested; and
Figure 4 illustrates respective steps of an operational flow sequence employed in the mechanism for generating a trouble-shooting strategy based upon information and reactional testing.

Before describing in detail the new and improved automated trouble-shooting mechanism in accordance with the present invention, it should be observed that the present invention resides primarily in what is effectively an information processing sub-system embedded within, and an associated set of databases employed by, the supervisory control software resident in the above-referenced craftsperson's portable computer unit. One of these databases is a knowledge or 'experience' database containing rules and static parameters employed by the information processing sub-system to define its characteristics and behavior. The second database is a shared database in which raw parametric data associated with the line under test is stored. Thus, the information processing sub-system of the present invention effectively constitutes an artificial intelligence, trouble-shooting application, engine, which employs the knowledge and experience rules in the knowledge database to evaluate the data stored in the shared database, in order to reach a recommended course of action that will enable the craftsperson to solve the problem presented on the trouble ticket.

The invention illustrated by the drawings show only those specific details in a convenient functional grouping.

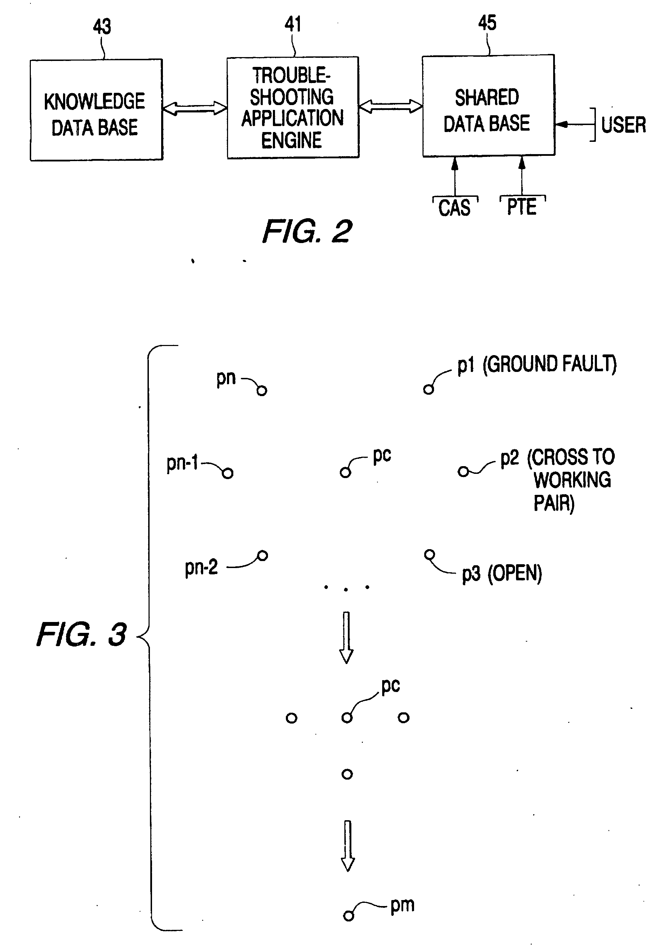

Figure 2 shows the fundamental system architecture as comprising an information processing sub-system, trouble-shooting application engine 41, and an associated set of databases 43 and 45. Database 43 is a knowledge or 'experience' database containing rules and static parameters which define the characteristics and behavior of engine 41.

The rule sets and information stored in database 45 are application specific, here - telephone line trouble-shooting specific, prepared in accordance with a rigorous diagnostic evaluation of all possible problems that may occur on a line, the potential sources of such problems, and recommended procedures to repair the line and thereby remove the fault. Moreover, as the system learns new attributes of problems and remedial procedures associated with those problems, the knowledge database is updated to include that information, so as to enable the application engine to make a more informed decision when recommending a trouble-shooting strategy.

The database 45 is a shared database in which parametric data associated with the line under test is stored. Such data may be sourced from a variety of external sources, such as data acquired through a work order manager software application (e.g. the previously mentioned AT&T CAS (craft access system) application, technician access network (TAN), or automated work administration system (AWAS)), measurement data sourced by portable test equipment (PTE), or data input by the user.), measurement data sourced by portable test equipment (PTE) 52, or by the user 53.

The engine 41 uses the knowledge and experience rules in the knowledge database 43 to evaluate the raw data in the shared database 45, in order to reach a recommended course of action to the craftsperson to solve the problem presented on the trouble ticket. For this purpose, engine 41 comprise an application engine produced by Stanford University, Palo Alto, Cal., known as 'The Coarse Program Model', which, using the rules and parameters of the knowledge database 43, establishes a field of possible/probable fault candidates that have relationships or linkages with a critical point of a set of control parameters. The candidates of a given field are those which exhibit one or more symptoms revealed by values of test parameters. Then, using test parameter data in the shared database 45 derived from an external source, such as a line measurement test head, or input by the service technician, for example, the engine 41 refines the field of candidates to those containing successively smaller numbers of members, until a most likely candidate as the cause of the problem is established.

This operation is diagrammatically illustrated in Figure 3, which shows a field of candidate points p1, p2, p3, ..., pn, which are associated with respectively different potential anomaly or fault candidates for the cause of the problem that prompted the generation of a trouble ticket for a given line to be tested. In the non-limiting example of Figure 3, point p1 is associated with a ground fault, point p2 is associated with a cross to a working pair, and point p3 is associated with an open line.

As the databases employed by the application engine are updated with more current information, in particular, as the shared database 45 is dynamically updated with test result information derived from measurements conducted on the line or from an application system, such as data derived from portable test equipment for example, engine 41 processes this information in accordance with the rule set of the knowledge data base and excludes from the field of candidates those points that are no longer sufficiently closely linked to the control point based upon the relationship specified by the control model. Eventually, the field is reduced to a single, most likely fault candidate point pm, which the engine 41 uses to generate a remedial strategy message to the craftsperson via the computer display screen.

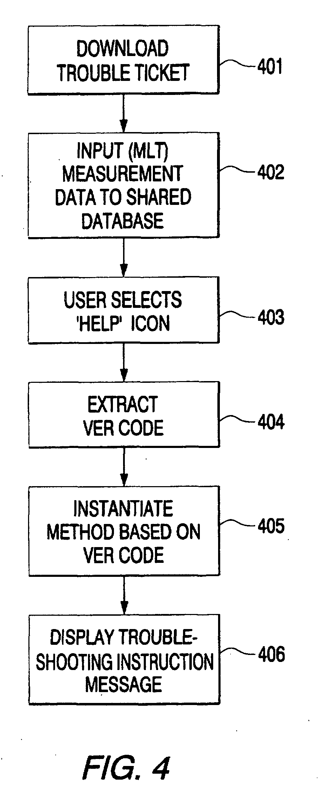

Figure 4 shows the operational flow sequence of a mechanism for generating a trouble-shooting strategy based upon information and reactional testing, in accordance with an embodiment of the present invention will be described. When a subscriber or customer places a service call to an automated service repair facility, the administrator at the repair facility confirms the request and generates a trouble ticket. A craftsperson is then dispatched to a specified location at which the line that prompted the reported problem may be tested and serviced.

Upon arriving at the job site, and establishing a communication with the necessary remote facility (central office and associated data center) via the wireless - wireline communications sub-systems contained in the portable computer unit and service vehicle, then, in step 401, the technician downloads whatever information is available for the trouble ticket being serviced.

This initial operation customarily involves the use of a work order manager application, such as the above-referenced CAS application, and requires the craftsperson to exercise test equipment, such as a SASS transmission conditioning system, or a direct access test unit (DATU), in order to provide preliminary parametric data for the line being serviced, that will enable the application engine to estimate the cause of the fault.

Where preliminary information provided by the trouble ticket and the results of initial test measurements are sufficient for the application engine to determine the cause of a fault, a location and repair scenario message is generated. The application engine is operative to coordinate data gathering - by invoking an external test function, and subsequent analysis - by the observation or measurement of the line's response to the invoked operation. For example, the application engine may generate an instruction that requests the DATU 35 to open the subscriber line 16. It then reads the response of the portable test equipment (test head 14) to the invoked stimulus provided by the DATU. For the example of opening the subscriber line, the voltage reading output of the portable test equipment 14 should be zero. The application engine then makes a decision on what is to be done next based upon the monitored PTE output.

In step 402, the measurement data derived from the test equipment is downloaded into the shared database 45. Accompanying the parametric test data itself is a prescribed VER code that associates the test conducted by the mechanized test equipment with the rule set in the knowledge database. Once the test measurement and data download operation is complete, the user is presented with a display screen that contains a menu of options, that may include further testing of the line, or other functions. Since the application engine 41 is operative to generate a trouble-shooting strategy based upon a diagnostically evaluation of the trouble ticket and available measurement data stored in the shared database, the level of experience or skill of the technician will not prevent a successful choice of menu items to accomplish the task. While a very experienced craftsperson might readily choose the appropriate test function menu item for the trouble ticket at hand, the incorporation of the trouble-shooting application engine permits a lesser skilled individual to be guided through a problem correction sequence.

For this purpose, each menu screen includes a 'Help" icon. In step 403, when the Help icon is invoked (by the craftsperson pressing a pen against the contact-sensitive screen of the computer unit), the application engine displays a message to the user indicating the results of its analysis of the information currently available in the knowledge and shared databases and recommends what the technician should do next. For this purpose, in response to the technician invoking the 'Help' icon, then in step 404, the application engine extracts the VER code that has been downloaded into the shared database. Next, in step 405, it instantiates what method is to be carried out based upon the VER code. Based upon the selected method, a message will be displayed that will instruct the user what should be done.

More particularly, in step 406, an instruction message associated with the selected method is displayed to the user. For example, if the preliminary information provided by the trouble ticket and the results of the initial MLT measurements are sufficient to arrive at a cause of the fault, a location and repair scenario message might be generated. On the other hand, if further testing of the line is necessary, the displayed message may instruct the user to again exercise one or more additional tests. Namely, help/instruction message screens are successively generated, as necessary, and the user is instructed to derive additional information, for example, by exercising the test head, until the application engine has refined a field of potential causes to a single probable source.

Assuming, for example, that the iterative measurement and evaluation process described above has determined that the cause of the line fault is a ground fault, the following message might be displayed: "The MLT has determined that a ground fault exists. This type of fault occurs mostly in buried cables: Use a ground fault locator and earth gradient frame to locate the fault. Expose the cable at the point of the fault and repair the cable." This message not only represents the results of the engine's analysis of the trouble ticket and test and parameter data, but it serves to provide practical information to the technician (by confirming a choice made by a skilled craftsperson, or supplying on the job training to a lesser skilled individual). The craftsperson may then proceed to carry out the suggested correction procedure, to remedy the fault. Upon completion of this exercise, the line may again be tested to verify the repair.

As will be appreciated from the foregoing description, by incorporating the trouble-shooting mechanism in accordance with the present invention into a telephone service technician's portable computer unit, the ability of a craftsperson who has been dispatched to a service site to expeditiously remedy a problem of a trouble ticket is enhanced, regardless of the level of skill of the service technician. By analyzing multiple sources of information, including user inputs from the craftsperson, parametric data embedded in the dispatch (trouble ticket), test data obtained through the execution of local tests, and remote test data (obtained through a system such as a mechanized loop testing (MLT) system), the trouble-shooting mechanism of the present invention is able to rapidly derive and suggest to the technician a problem solving strategy that is both deterministically accurate and instructive.

A trouble-shooting mechanism is incorporated into a telephone service technician's portable computer unit, to enable a craftsperson, to respond to a trouble ticket. By analyzing multiple sources of information, including user inputs from the craftsperson, parametric data embedded in the trouble ticket, test data obtained through the execution of local tests, and remote test data, the trouble-shooting mechanism derives and suggests a problem solving strategy that appears accurate. The system architecture includes a trouble-shooting application engine, and an associated set of databases, one of which is a knowledge database, and the other of which is a shared, parameter database. The knowledge database contains rules and static parameters which define the characteristics and behavior of the application engine. These rule sets and information are telephone line trouble-shooting specific.

## Claims

1. A portable communication and processing unit (10) through which a craftsperson, who may be dispatched to a service site that is remotely located with respect to a telephone office (12) serving a subscriber line (16), may communicate with a subscriber line test system (33) of said telephone office via a long haul wireless interface (28) mounted in a craftsperson's service vehicle (20), and with a test head (14) that is connectable to said subscriber line, said communication and processing unit having an input/output device (15/17), including a visual display (15), which is adapted to convert information input by said craftsperson into prescribed control signals and to transmit said control signals to said test system and which is adapted to present information associated with the operation of said test system to said craftsperson,
**characterized in that**:
said portable communication and processing unit contains an information processing, trouble-shooting application engine (41), and first and second databases (43, 45) coupled thereto, said first database (43) being a knowledge database which is adapted to store rules and static parameters which define the characteristics and behavior of said application engine, said second database (45) being a shared database which is adapted to store parameter data associated with one or more tests conducted on said line, said trouble-shooting application engine being adapted to perform a diagnostic evaluation of data in said shared database, in accordance with rule sets stored in said knowledge data base and being adapted to generate a proposed solution to the problem in said line for guiding said craftsperson to remove the fault.

2. The portable communication and processing unit according to claim 1, wherein said application engine (41) is adapted to execute a diagnostic evaluation of a plurality of possible problems that may occur on said line, potential sources of said possible problems, and recommended procedures to repair said line.

3. The portable communication and processing unit according to claim 1, wherein said shared database (45) is adapted to store data acquired through one or more of a work order manager software application, measurement data sourced by portable test equipment, and data input by said craftsperson.

4. The portable communication and processing unit according to claim 1, wherein said shared database (45) is adapted to store parametric test data having a test identification code that associates a test conducted by test equipment with a rule set in said knowledge database, in response to which said trouble-shooting application engine (41) is adapted to generate a trouble-shooting strategy based upon a diagnostic evaluation of a trouble ticket reporting said problem and said parametric measurement data stored in said shared database.

5. The portable communication and processing unit according to claim 1, wherein said trouble-shooting application engine (41) is adapted to generate a prescribed symbol on said display screen (15), which symbol, when invoked by said craftsperson, is adapted to cause said engine to display a message indicating results of said engine's analysis of information currently available in said knowledge and shared databases and suggesting a course of action to said craftsperson to solve said problem.

6. A method of conducting a test of a subscriber line (16) by a portable communication and processing unit (10) through which a craftsperson, who is dispatched to a service site remotely located with respect to a telephone office (12) serving said subscriber line, communicates with a subscriber line test system (33) of said telephone office via a long haul wireless interface (28) mounted in a craftsperson's service vehicle (20), and with a test head (14) that is connectable to said subscriber line, said communication and processing unit having an input/output device (15/17), including a visual display (15), through which information input by said craftsperson is converted into prescribed control signals and transmitted to said test system and through which information associated with the operation of said test system is presented to said craftsperson,
**characterized by** the step of:
providing said portable communication and processing unit with an information processing, trouble-shooting application engine (41), and first and second databases (43, 45) coupled thereto, said first database (43) being a knowledge database storing rules and static parameters which define the characteristics and behavior of said application engine, said second database (45) being a shared database storing parameter data associated with one or more tests conducted on said line, said trouble-shooting application engine performing a diagnostic evaluation of data in said shared database, in accordance with rule sets stored in said knowledge data base and generating a proposed solution to the problem in said line that will guide said craftsperson to remove the fault.

7. The method according to claim 6, wherein said application engine (41) executes a diagnostic evaluation of a plurality of possible problems that may occur on said line, potential sources of said possible problems, and recommended procedures to repair said line.

8. The method according to claim 6, wherein data stored by said shared database (45) stores data acquired through one or more of a work order manager software application, measurement data sourced by portable test equipment, and data input by said craftsperson.

9. The method according to claim 6, wherein parametric test data stored in said shared database (45) has a test identification code that associates a test conducted by test equipment with a rule set in said knowledge database, in response to which said trouble-shooting application engine (41) generates a trouble-shooting strategy based upon a diagnostic evaluation of a trouble ticket reporting said problem and said parametric measurement data stored in said shared database.

10. The method according to claim 6, wherein said trouble-shooting application engine (41) generates a prescribed symbol on said display screen (15), which symbol, when invoked by said craftsperson, causes said engine to display a message indicating results of said engine's analysis of information currently available in said knowledge and shared databases and suggesting a course of action to said craftsperson to solve said problem.

## Patentansprüche

1. Tragbare Kommunikations- und Verarbeitungseinheit (10), mittels welcher ein Fachmann, der an einen Dienstort entsendet sein kann, der in Bezug auf eine eine Teilnehmerleitung (16) bedienende Telefondienststelle (12) abgelegen liegt, die mit einem Teilnehmerleitungstestsystem (33) der genannten Telefondienststelle über eine drahtlose Langstreckenschnittstelle (28), welche in einem Dienstfahrzeug (20) des Fachmanns befestigt ist, und mit einem Testkopf (14) kommunizieren kann, der mit der genannten Teilnehmerleitung verbindbar ist, wobei die genannte Kommunikations- und Verarbeitungseinheit eine Eingabe-Ausgabe-Vorrichtung (15/17) hat, einschließlich einer optischen Anzeige (15), welche ausgebildet ist, um die vom genannten Fachmann eingegebene Information in festgelegte Steuersignale umzuwandeln und die genannten Steuersignale zum genannten Testsystem zu übermitteln und welche ausgebildet ist, um dem genannten Fachmann die mit dem Betrieb des genannten Testsystems verbundene Information darzustellen,
**dadurch gekennzeichnet, dass**
die genannte tragbare Kommunikations- und Verarbeitungseinheit eine Anwendungsmaschine (41) zur Informationsverarbeitung und Fehlerbeseitigung und daran gekoppelte erste und zweite Datenbanken (43, 45) enthält, wobei die genannte erste Datenbank (43) eine Wissensdatenbank ist, welche ausgebildet ist, um Regeln und statische Parameter zu speichern, welche die charakteristischen Eigenschaften und das Verhalten der genannten Anwendungsmaschine definieren, die zweite Datenbank (45) eine gemeinsam genutzte Datenbank ist, welche ausgebildet ist, um Parameterdaten zu speichern, welche mit einem oder mehreren auf der genannten Leitung durchgeführten Tests verknüpft sind, und die genannte Anwendungsmaschine zur Fehlerbeseitigung ausgebildet ist, um eine diagnostische Beurteilung der Daten in der genannten gemeinsam genutzten Datenbank durchzuführen, in Übereinstimmung mit den Regelsätzen, welche in der genannten Wissensdatenbank gespeichert sind und ausgebildet sind, um eine vorgeschlagene Lösung für das Problem in der genannten Leitung zu erzeugen, um den genannten Fachmann anzuleiten, den Fehler zu beseitigen.

2. Tragbare Kommunikations- und Verarbeitungseinheit gemäß Anspruch 1, wobei die genannte Anwendungsmaschine (41) ausgebildet ist, um eine diagnostische Beurteilung einer Vielzahl von möglichen Problemen, welche auf der genannten Leitung auftreten können, möglichen Quellen der genannten möglichen Probleme und empfohlenen Vorgehensweisen durchzuführen, um die genannte Leitung zu reparieren.

3. Tragbare Kommunikations- und Verarbeitungseinheit gemäß Anspruch 1, wobei die genannte gemeinsam genutzte Datenbank (45) ausgebildet ist, um Daten zu speichern, welche durch eine oder mehrere Softwareanwendungen für das Arbeitsauftragsmanagement, von tragbarem Testgerät bezogene Messdaten und vom genannten Fachmann eingegebene Daten erhalten werden.

4. Tragbare Kommunikations- und Verarbeitungseinheit gemäß Anspruch 1, wobei die genannte gemeinsam genutzte Datenbank (45) ausgebildet ist, um parametrische Testdaten zu speichern, die einen Testidentifikationscode haben, der einen von Testgerät durchgeführten Test mit einem Regelsatz in der genannten Wissensdatenbank verknüpft, worauf die genannte Anwendungsmaschine (41) zur Fehlerbeseitigung ausgebildet ist, eine Fehlerbeseitigungsstrategie zu entwickeln, welche auf einer diagnostischen Beurteilung einer Störungsliste beruht, welche das genannte Problem und die genannten parametrischen Messdaten, welche in der genannten gemeinsam genutzten Datenbank gespeichert sind, meldet.

5. Tragbare Kommunikations- und Verarbeitungseinheit gemäß Anspruch 1, wobei die genannte Anwendungsmaschine zur Fehlerbeseitigung (41) ausgebildet ist, um ein festgelegtes Symbol auf dem genannten Anzeigeschirm (15) zu erzeugen, welches, wenn es vom genannten Fachmann aufgerufen wird, angepasst ist, um die genannte Maschine zu veranlassen, eine Nachricht anzuzeigen, welche die Ergebnisse der Analyse der gegenwärtig erhältlichen Information der genannten Maschine in den genannten Wissens- und gemeinsam genutzten Datenbanken angibt und dem genannten Fachmann eine Handlungsweise vorschlägt, um das genannte Problem zu lösen.

6. Verfahren zum Durchführen eines Tests einer Teilnehmerleitung (16) durch eine tragbare Kommunikations- und Verarbeitungseinheit (10), mittels welcher ein Fachmann, der zu einem Dienstort entsendet ist, der in Bezug auf eine die genannte Teilnehmerleitung bedienende Telefondienststelle (12) abgelegen liegt, mit einem Teilnehmerleitungstestsystem (33) der genannten Telefondienststelle über eine drahtlose Langstreckenschnittstelle (28), die in einem Dienstfahrzeug (20) des Fachmanns befestigt ist, und mit einem Testkopf (14) kommuniziert, der mit der genannten Teilnehmerleitung verbindbar ist, wobei die Kommunikations- und Verarbeitungseinheit eine Eingabe-Ausgabe-Einrichtung (15/17) hat, einschließlich einer optischen Anzeige (15), durch welche die vom genannten Fachmann eingegebene Information in festgelegte Steuersignale umgewandelt wird und zum genannten Testsystem übermittelt wird, und durch welche dem genannten Fachmann die mit dem Betrieb des genannten Testsystems verbundene Information dargestellt wird,
durch den Schritt gekennzeichnet:
Ausstatten der genannten Kommunikations- und Verarbeitungseinheit mit einer Anwendungsmaschine (41) zur Informationsverarbeitung und Fehlerbeseitigung und daran gekoppelten ersten und zweiten Datenbanken (43, 45), wobei die genannte erste Datenbank (43) eine Wissensdatenbank ist, die Regeln und statische Parameter speichert, welche die charakteristischen Eigenschaften und das Verhalten der genannten Anwendungsmaschine definieren, die genannte zweite Datenbank (45) eine gemeinsam genutzte Datenbank ist, welche die Parameterdaten speichert, welche mit einem oder mehreren auf der genannten Leitung durchgeführten Tests verknüpft sind, und die genannte Anwendungsmaschine zur Fehlerbeseitigung eine diagnostische Beurteilung der Daten in der gemeinsam genutzten Datenbank durchführt, in Übereinstimmung mit den in der genannten Wissensdatenbank gespeicherten Regelsätzen, und eine vorgeschlagene Lösung des Problems in der genannten Leitung entwickelt, die den genannten Fachmann anleitet, den Fehler zu beseitigen.

7. Verfahren gemäß Anspruch 6, wobei die genannte Anwendungsmaschine (41) eine diagnostische Beurteilung einer Vielzahl von möglichen Problemen, welche auf der genannten Leitung auftreten können, möglichen Quellen der genannten möglichen Probleme und empfohlenen Vorgehensweisen, um die genannte Leitung zu reparieren, durchführt.

8. Verfahren gemäß Anspruch 6, wobei die von der genannten gemeinsam genutzten Datenbank (45) gespeicherten Daten Daten speichert, weiche durch eine oder mehrere Softwareanwendungen für das Arbeitsauftragsmanagement, von tragbarem Testgerät bezogene Messdaten und vom genannten Fachmann eingegebene Daten erhalten werden.

9. Verfahren gemäß Anspruch 6, wobei die in der genannten gemeinsam genutzten Datenbank (45) gespeicherten parametrischen Daten einen Testidentifikationscode haben, der einen vom Testgerät durchgeführten Test mit einem Regelsatz in der genannten Wissensdatenbank verknüpft, worauf die genannte Anwendungsmaschine zur Fehlerbeseitigung (41) eine Fehlerbeseitigungsstrategie entwickelt, die auf einer diagnostischen Beurteilung einer Störungsliste beruht, welche das genannte Problem und die genannten parametrischen Messdaten, die in der genannten gemeinsam genutzten Datenbank gespeichert werden, meldet.

10. Verfahren gemäß Anspruch 6, wobei die genannte Anwendungsmaschine zur Fehlerbeseitigung (41) ein festgelegtes Symbol auf dem genannten Anzeigeschirm (15) erzeugt, welches, wenn es vom genannten Fachmann aufgerufen wird, die genannte Maschine veranlasst, eine Nachricht anzuzeigen, welche die Ergebnisse der Analyse der gegenwärtig erhältlichen Information der genannten Maschine in den genannten Wissens- und gemeinsam genutzten Datenbanken angibt und dem Fachmann eine Handlungsweise vorschlägt, um das genannte Problem zu lösen.

## Revendications

1. Unité de communication et de traitement portable (10) par laquelle un ouvrier qualifié, qui peut être envoyé sur un site de maintenance situé à distance par rapport à un central téléphonique (12) desservant une ligne d'abonné (16), peut communiquer avec un système de test de ligne d'abonné (33) dudit central téléphonique par l'intermédiaire d'une interface sans fil longue distance (28) installée dans un véhicule de maintenance (20) d'un ouvrier qualifié, et avec une tête de test (14) qui peut être connectée à ladite ligne d'abonné, ladite unité de communication et de traitement comportant un dispositif d'entrée/sortie (15/17), comprenant un écran de visualisation (15), qui est adapté pour convertir des informations entrées par ledit ouvrier qualifié en signaux de commande prescrits et pour transmettre lesdits signaux de commande audit système de test et qui est adapté pour présenter audit ouvrier qualifié des informations associées au fonctionnement dudit système de test,
**caractérisée en ce que** :
ladite unité de communication et de traitement portable contient un moteur d'application de traitement d'informations et de localisation de panne (41), des première et deuxième bases de données (43, 45) couplées à celui-ci, ladite première base de données (43) étant une base de données de connaissances qui est adaptée pour mémoriser des règles et des paramètres statiques qui définissent les caractéristiques et le comportement dudit moteur d'application, ladite deuxième base de données (45) étant une base de données partagée qui est adaptée pour mémoriser des données de paramètres associées à un ou plusieurs tests effectués sur ladite ligne, ledit moteur d'application de localisation de panne étant adapté pour effectuer une évaluation de diagnostic de données dans ladite base de données partagée, conformément à des ensembles de règles mémorisés dans ladite base de données de connaissances, et étant adapté pour générer une solution proposée au problème de ladite ligne pour guider ledit ouvrier qualifié pour la résolution de la défaillance.

2. Unité de communication et de traitement portable selon la revendication 1, dans laquelle ledit moteur d'application (41) est adapté pour exécuter une évaluation de diagnostic d'une pluralité de problèmes possibles qui peuvent apparaître sur ladite ligne, de sources potentielles desdits problèmes possibles et de procédures recommandées pour réparer ladite ligne.

3. Unité de communication et de traitement portable selon la revendication 1, dans laquelle ladite base de données partagée (45) est adaptée pour mémoriser des données acquises par l'un ou plusieurs d'une application logicielle de gestion d'ordres d'exécution, de données de mesure délivrées par un équipement de test portable et de données entrées par ledit ouvrier qualifié.

4. Unité de communication et de traitement portable selon la revendication 1, dans laquelle ladite base de données partagée (45) est adaptée pour mémoriser des données de test paramétriques comportant un code d'identification de test qui associe un test effectué par un équipement de test à un ensemble de règles de ladite base de données de connaissances, en réponse auquel ledit moteur d'application de localisation de panne (41) est adapté pour générer une stratégie de localisation de panne basée sur une évaluation de diagnostic d'un dossier d'incident rapportant ledit problème et sur lesdites données de mesure paramétriques mémorisées dans ladite base de données partagée.

5. Unité de communication et de traitement portable selon la revendication 1, dans laquelle ledit moteur d'application de localisation de panne (41) est adapté pour générer un symbole prescrit sur ledit écran d'affichage (15), lequel symbole, lorsqu'il est invoqué par ledit ouvrier qualifié, est adapté pour amener ledit moteur à afficher un message indiquant les résultats de l'analyse, effectuée par ledit moteur, des informations actuellement disponibles dans lesdites bases de données de connaissances et partagée et suggérant audit ouvrier qualifié un plan d'action pour résoudre ledit problème.

6. Procédé d'exécution d'un test sur une ligne d'abonné (16) par une unité de communication et de traitement portable (10) par laquelle un ouvrier qualifié, qui peut être envoyé sur un site de maintenance situé à distance par rapport à un central téléphonique (12) desservant ladite ligne d'abonné, communique avec un système de test de ligne d'abonné (33) dudit central téléphonique par l'intermédiaire d'une interface sans fil longue distance (28) installée dans un véhicule de maintenance (20) d'un ouvrier qualifié, et avec une tête de test (14) qui peut être connectée à ladite ligne d'abonné, ladite unité de communication et de traitement comportant un dispositif d'entrée/sortie (15/17), comprenant un écran de visualisation (15), par lequel des informations entrées par ledit ouvrier qualifié sont converties en signaux de commande prescrits et transmises audit système de test et par lequel des informations associées au fonctionnement dudit système de test sont présentées audit ouvrier qualifié,
**caractérisé par** l'étape consistant à :
équiper ladite unité de communication et de traitement portable d'un moteur d'application de traitement d'informations et de localisation de panne (41) et de première et deuxième bases de données (43, 45) couplées à celui-ci, ladite première base de données (43) étant une base de données de connaissances mémorisant des règles et des paramètres statiques qui définissent les caractéristiques et le comportement dudit moteur d'application, ladite deuxième base de données (45) étant une base de données partagée mémorisant des données de paramètres associées à un ou plusieurs tests effectués sur ladite ligne, ledit moteur d'application de localisation de panne effectuant une évaluation de diagnostic de données dans ladite base de données partagée, conformément à des ensembles de règles mémorisés dans ladite base de données de connaissances et générant une solution proposée au problème de ladite ligne qui guidera ledit ouvrier qualifié pour la résolution de la défaillance.

7. Procédé selon la revendication 6, dans lequel ledit moteur d'application (41) exécute une évaluation de diagnostic d'une pluralité de problèmes possibles qui peuvent apparaître sur ladite ligne, de sources potentielles desdits problèmes possibles et de procédures recommandées pour réparer ladite ligne.

8. Procédé selon la revendication 6, dans lequel les données mémorisées par ladite base de données partagée (45) mémorisent des données acquises par l'un ou plusieurs d'une application logicielle de gestion d'ordres d'exécution, de données de mesure délivrées par un équipement de test portable et de données entrées par ledit ouvrier qualifié.

9. Procédé selon la revendication 6, dans lequel les données de test paramétriques mémorisées dans ladite base de données partagée (45) comportent un code d'identification de test qui associe un test effectué par un équipement de test à un ensemble de règles de ladite base de données de connaissances, en réponse auquel ledit moteur d'application de localisation de panne (41) génère une stratégie de localisation de panne basée sur une évaluation de diagnostic d'un dossier d'incident rapportant ledit problème et sur lesdites données de mesure paramétriques mémorisées dans ladite base de données partagée.

10. Procédé selon la revendication 6, dans lequel ledit moteur d'application de localisation de panne (41) génère un symbole prescrit sur ledit écran d'affichage (15), lequel symbole, lorsqu'il est invoqué par ledit ouvrier qualifié, amène ledit moteur à afficher un message indiquant les résultats de l'analyse, effectuée par ledit moteur, des informations actuellement disponibles dans lesdites bases de données de connaissances et partagée et suggérant audit ouvrier qualifié un plan d'action pour résoudre ledit problème.
